# EUROPEAN PATENT SPECIFICATION

(11) **EP 2 711 153 B1**
(45) Date of publication and mention of the grant of the patent: **30.03.2016**
(21) Application number: 13184883.0
(22) Date of filing: 18.09.2013
(51) Int. Cl.: B29C 33/64, B29C 33/58, B29D 30/06, B05D 1/00, C23C 16/46

(54) **Method of coating a metal mold surface with a polymer coating, mold for rubber products and method of molding rubber products**
Verfahren zum Beschichten einer Metallformwerkzeugoberfläche mit einer Polymerbeschichtung, Form für Gummierzeugnisse und Verfahren zum Formen von Gummierzeugnissen
Procédé de revêtement d'une surface de moule métallique avec revêtement polymère, moule pour produits en caoutchouc et procédé de moulage de produits en caoutchouc

(30) Priority: 21.09.2012 US 201213623922
(43) Date of publication of application: 26.03.2014
(73) Proprietor: The Goodyear Tire & Rubber Company, Akron, Ohio 44316 (US)
(72) Inventor: Siffer, Frederic Gerard Auguste, 57540 Petite Rosselle (FR); Richards, Jimmy Lee, Rootstown, Ohio 44272 (US)
(74) Representative: Kutsch, Bernd

(56) References cited:
- EP-A1- 0 374 080
- EP-A2- 0 252 870
- EP-A2- 2 326 153
- WO-A1-2006/079359
- WO-A1-2009/033017
- WO-A1-2011/111669
- US-A1- 2007 235 890

## Description

### Field of the Invention

This invention relates to preparation of a metal mold surface for molding rubber products by plasma jet directed polymer coating, a coated mold for rubber products and production of rubber products. Such rubber products are rubber tires and industrial products, particularly rubber tires.

### Background

Rubber products, such as for example pneumatic rubber tires, are typically produced by molding and curing sulfur curable green, or uncured, rubber tires in a tire mold in which the uncured pneumatic rubber tire is pressed outwardly against a metal mold surface by means of an internal fluid expanding rubber bladder (e.g. by application of internal steam pressure to the bladder envelop). By such method the uncured rubber tire is pressed against and shaped against the metal mold surface which defines the tire's tread pattern and configuration of its sidewalls and during which a portion of the rubber in proximity to the mold surface flows to permit the rubber to assume the contours of the mold surface. By application of heat to the mold, the tire is cured within the mold. The mold is then opened and the cured tire removed from the mold. Such pneumatic rubber tire molding and curing is well known to those having skill in such art.

It is important that such molded and sulfur cured rubber products such as tires be readily removable from their tire molds. A release coating is sometimes applied to the surface of the uncured tire to allow the cured tire to be suitably removed from the mold. It is both economically and physically desirable to provide a durable release coating on a tire mold surface itself to provide a releasability of the molded tire from the tire mold over repeated tire molding and curing cycles.

Further, by repeated tire molding and curing cycles, the mold surface of a metal tire mold may be subject to a buildup of materials, or debris, on its surface. Buildup of materials on the mold surface may sometimes be referred to mold fouling which may, for example, affect cosmetic appearance of the surface of the molded tire. Such fouled metal tire mold surface may be periodically cleaned to remove such mold fouling when appropriate. Such tendency for mold fouling is well known to those having skill in such art.

Therefore, in practice, it may be desired to promote releasability of sulfur cured rubber products such as tires, as well as various industrial product such as, for example belts, hoses, track pads and shoes, from their mold surfaces and, further, to retard, diminish or substantially prevent or release mold fouling of the surface of the rubber (e.g. tire) mold.

For this invention, it desired to evaluate a plasma induced polymer coating of a metal mold surface for molding rubber products (e.g. tires) to promote releasability of a cured rubber product.

US-A- 2007/0235890 describes a method of coating tire molds using a plasma and introducing a precursor material into the plasma. As precursor, a fluorocarbon polymeric material is used.

EP-A- 0 374 080 describes a method of treating a tire mold using a plasma and introducing into the plasma a precursor providing a polymerized organopolysiloxane coating on the mold.

WO-A- 2009/033017 describes a method of forming molds wherein the method comprises treating the mold surface with a plasma and introducing a precursor material into the plasma.

### Summary and Practice of the Invention

The invention relates to a method in accordance with claim 1, to a mold in accordance with claim 10 and to methods in accordance with claims 11 and 12 respectively.

Dependent claims refer to p referred embodiments of the invention.

In one aspect, the present invention is directed to a method of treating a metal (e.g. steel or aluminum) mold surface for molding and curing rubber products (e.g. tires) which comprises applying a thin polymer layer to the surface of the mold to facilitate removal of a rubber product having been cured with in such mold.

A plurality of such coatings on the metal mold surface may also be provided.

Further, a mold for rubber products (e.g. tires) is provided with a coated metal surface (e.g. steel or aluminum surface) prepared by said method.

In addition, a method of molding and curing a rubber product (e.g. pneumatic rubber tire) is provided.

In accordance with this invention, a method of treating a metal surface of a mold for molding and curing rubber products is provided which comprises directing an atmospheric plasma jet comprising an ionized gas containing a polymerizable precursor (e.g. atomized liquid polymerizable precursor) to a metal molding surface of the mold to form and bond a thin polymer layer of plasma polymerized precursor on said metal mold surface to promote release of a cured rubber product from said treated mold surface.

In one embodiment, said ionized gas for said plasma is electrically ionized by, for example, allowing said gas to pass between a set of positive and negative electrodes (e.g. an electric arc) to cause the gas to be in a high state of high energy environment to thereby promote polymerization of the introduced polymerizable precursor.

Such deposited polymer on said metal mold surface from said plasma is in a form of a polymer layer having a thickness, for example, in a range of from 10 nm to 500 nm, preferably 20 nm to 100 nm, and is provided from polymerizable precursors so long the resulting polymer has an ability to promote releasability of a cured rubber product from the deposited polymer layer on the metal mold surface.

Representative of such rubber products are pneumatic rubber tires and engineered (e.g. industrial) rubber products comprising for example belts (e.g. power and transmission belts), hoses, vehicular track pads and shoes.

It is to be appreciated that the atmospheric plasma jets may be in a form of pulse or continuous plasmas. The plasmas may be generated, for example, from dielectric barrier jets, microwave torches, radio-frequency torches, low frequency torches, current-carrying arc plasma jets, or by any other means of producing a suitable atmospheric plasma able to polymerize organic precursors of polymers known to one skilled in such art.

While there are additional methods of creating an atmospheric plasma jet, a current-carrying arc plasma jet, appears to be an acceptable means of applying the thin polymer layer to the metal mold surface.

In practice, to the ionized gas may be introduced a small particle sized (e.g. atomized) liquid polymerizable precursor (polymer precursor, namely a precursor to form a polymer) to form a plasma jet, expelled through and from a torch, comprised of the ionized gas and atomized precursor for which polymerization of the precursor is promoted by the high energy environment provided by the plasma.

The plasma jet is directed (e.g. directed from its torch) to a molding surface of the steel or aluminum mold to form and deposit a thin polymer layer (e.g. coating) from the polymerized precursor on said steel surface of the mold by polymerization of said polymerizable precursor.

In one embodiment, it is desired that the polymer layer is bonded to the steel or aluminum mold surface in a sense of chemical bonding of the polymerized coating to the surface of the steel or aluminum is created as a result of the high plasma energy environment.

In one embodiment, it is desired that the polymer layer resists significant adhesion of the rubber to thereby permit the molded and cured rubber to be releasable from the mold surface, (e.g. to permit removal of the molded rubber product from the mold surface).

In one embodiment, it is desired that the polymer comprising a crosslinked polymer in a sense of it has been observed that the plasma polymerized coatings usually exhibit some degree of crosslinking. In this manner, it is believed that a degree of crosslink density within the polymer coating promotes mechanical strength to withstand abrasion when taking cured tires out of the mold.

By atmospheric pressure plasma, it is meant that the pressure of the plasma is equal to or slightly above the ambient pressure of the surroundings. The pressure of the plasma may be desirably somewhat higher than ambient, such that the plasma pressure is sufficient to induce the desired flow rate through a plasma generator which contains an ionized gas promoting electric arc.

An ionizable gas (e.g. carrier gas for the polymerizable polymer precursor) may be, for example a noble gas such as, for example helium, argon, xenon and neon as well as, for example, oxygen, nitrogen, carbon dioxide, nitrous oxide and air. In one embodiment, such ionizable gas is argon.

A carrier gas to carry the atomized liquid polymerizable precursor to the plasma plume may be for example also a noble gas such as, for example, helium, argon, xenon and neon as well as, for example, oxygen, nitrogen, carbon dioxide, nitrous oxide and air. In one embodiment such carrier gas is argon.

Representative of such polymerizable precursors may be comprised of, for example, and not intended to be limiting, one or more of disiloxanes, disilazanes, perfluoroacrylates (e.g. perfluorooctylacrylate and perfluorooctylmethacrylate), fluorinated silanes, vinylidene fluoride.

For example, such polymerizable precursors may be a disiloxane such as, for example, hexamethyldisiloxane; a disilazane such as for example hexamethyldisilazane; fluorinated silane comprising, for example, 1 H, 1 H, 2H-perfluorooctyltriethoxysilane and other fluorinated compounds comprising at least one of 1H, 1 H, 2H-perfluoro-1-alkylene where said alkylene group comprises of decene, octene, hexene or butene groups or 1 H, 1 H, 2H-perfluoro-1-alkanol where said alkanol group comprises of decanol, octanol, hexanol or butanol groups and fluorinated compounds such as, for example perfluoromethylcyclohexane, perfluorodimethylcyclohexane, hexafluorobenzene, perfluoromethyl vinyl ether, perfluoroethyl vinyl ether, perfluoropropyl vinyl ether, perfluorodimethylcyclobutane, perfluoromethylcyclopentane, perfluoromethyldecalin, tetrafluoroethylene, hexafluoropropylene and perfluorobutyl ethylene.

Such disiloxane, disilazane, fluorinated silane, vinylidene fluoride and fluorinated compounds are combined with said perfluoroacrylates to form a precursor for said plasma coating method and to thereby form a copolymer thereof.

The practice of the method of this invention is considered as being significant in a sense of being able to refresh the coating on the metal mold surface at a rubber product (e.g. pneumatic tire) manufacturing facility, particularly where a thin coating is desired to be applied by an energy and polymer precursor efficient method.

For a batch process wherein an object is exposed to an atmospheric plasma, the object may be exposed, for example, to the plasma for a period of from 1 to 100 seconds. In a continuous process, the exposure time may be characterized by a residence time expressed as the length or circumference of the object to be treated (e.g. in centimeters) with the plasma torch divided by the torch velocity (e.g. in cm/sec) multiplied by the number of plasma treatments applied to the object. The residence time in such a continuous process would then range, for example, from 0.5 to 100 seconds.

The flow rate of atomized precursor into the plasma generator necessary to obtain an effective amount of polymerized or partially polymerized precursor onto the mold surface will depend on the desired face velocity in the plasma generator, i.e. the gas velocity (e.g. in cm/sec) exiting the plasma torch. Necessary flow rate may be determined by one skilled in the art without undue experimentation.

The following drawings are provided for further understanding of the invention and are not intended to be limiting.

### The Drawings

A method is depicted for providing a thin polymer layer for enhancing releasability of sulfur cured rubber from a steel or aluminum surface, such as for example a metal surface of a mold for rubber products, such as for example tires and industrial products such as for example, belts, hoses, tracks and shoes, particularly a tire mold.

### In the Drawings

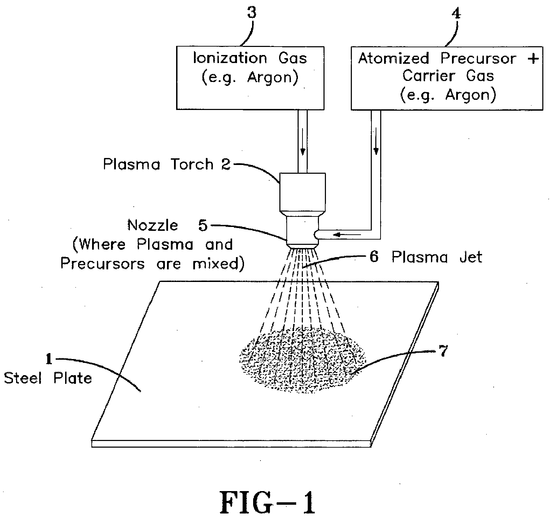

In Figure 1 a steel plate 1, is sandblasted.

To a cylindrical torch 2 device is fed a stream 3 of argon gas in which the argon gas is caused to pass through between positive and negative electrodes to ionize the argon gas to a high energy level at a flow rate through the torch 2 device of about 800 liters/hour (1/hr).

To the torch 2 device is introduced a stream of atomized precursor 4 carried by a carrier gas 5, namely argon gas where the atomized precursor 4 stream, namely a polymer precursor, is introduced into the stream 3 of argon gas, at substantially ambient atmospheric pressure, in the nozzle 6 of the torch 2 device to create a plasma jet 7 comprising the stream 3 of ionized gas which contains the atomized precursor 4.

The plasma jet 7 is passed over the steel plate 1 to deposit a thin polymer coating 8 onto the steel plate 1 created by the atomized precursor 4 contained in the stream 3 of ionized argon gas.

The invention is further described with reference to the following examples.

### EXAMPLE

In this example, treatments of sandblasted steel plates by an atmospheric plasma jet by which a polymerizable precursor is introduced are evaluated for providing a coating of polymer on the steel surface and compared to a steel plate without such treatment.

The plasma is provided as an electrical arc-formed ionized argon gas to which an atomized liquid polymerizable precursor is introduced. A polymerization of the precursor is promoted by the highly ionized argon gas in a sense being in a nature of what is believed to be a free radical polymerization process.

The liquid polymerizable precursor used was comprising 70 weight percent hexamethyldisiloxane (HMDSO) and 30 weight percent 1H,1H,2H,2H-perfluorooctyl acrylate (PFOA).

For this evaluation, 1 cm by 3 cm steel plates were positioned on a table and held stationary while the plasma jet was applied by the plasma torch device where the plasma jet was comprising the high energy ionized argon gas containing the atomized liquid polymerizable precursor for which one or more passes of the torch device, and thereby the jet, over the surface of the steel plates.

An electrical arc power of 70 Watts was provided through which the argon gas was passed within the torch device to cause its ionization.

The argon gas flow rate through the torch was about 800 liters/hour to which an atomized liquid polymerizable precursor is injected to form the plasma torch.

The plasma torch comprised of the ionized argon gas and polymerizable precursor is directed to and thereby applied to the surface of the steel plate in one and three passes. The period of exposure for each pass was about 15 seconds.

Three samples of the steel plate were evaluated and identified herein as Samples A, B and C.

The surface of all of the steel Samples had been pre-sandblasted with a fine grain sand.

Control Sample A was a steel plate without exposure by the plasma torch.

Experimental Sample B was a steel plate to which one pass of the plasma torch was applied to deposit the precursor in a form of a polymer layer on the steel plate.

Experimental Sample C was a steel plate to which three individual passes of the plasma torch was applied to deposit the precursor in a form of a polymer layer on the steel plate in a more homogeneous form therefore reducing the occurrence of pin holes.

To the steel plate Control Sample A and Experimental polymer coated Samples B and C were applied sulfur curable rubber blocks and the rubber blocks cured under conditions of elevated temperature and pressure against the Control and Experimental steel plates (for example at a temperature of about 155°C for about 35 minutes).

After cooling to room temperature (about 23°C), the energy needed to pull the cured rubber blocks from each of the steel plate Control Sample A and polymer coated Experimental steel plates B and C was measured and reported in the following Table 1.

**Table 1**

| Sample | Coating Passes | Average Separation Energy, milliJoules (mJ) |
|---|---|---|
| A (Control) | 0 | 1494 |
| B (Experimental) | 1 | 438 |
| C (Experimental) | 3 | 112 |

From Table 1 it can be seen that the energy needed to pull the cured rubber off of the steel plate drastically decreases when a plasma coating is applied as compared to the reference, or control, steel plate. Higher number of passes leads to a more homogeneous coating and therefore better release performances.

This is considered as being significant in a sense of that a thin plasma coated polymerized layer plays the role of a release coating.

Therefore, it is concluded that the level of performance of aforementioned plasma polymers as a release coating is similar to the one obtained with other more traditional release coatings. In addition, the plasma coating process can be done onsite using minimal amounts of energy, chemicals and handling while providing flexibility, on-demand mold coating as well as the possibility to automate the plasma coating process.

## Claims

1. A method of treating a metal surface of a mold for molding and curing rubber products, the method comprising applying an atmospheric plasma comprising an ionized gas containing a polymerizable precursor to a metal molding surface of the mold metal surface to form and bond a polymer layer of plasma polymerized precursor on the mold metal surface, wherein the precursor is a polymerizable monomer comprising at least one of disiloxanes, disilazanes, perfluoroacrylates, fluorinated silanes, vinylidene fluoride or another fluorinated compound, and wherein the precursor is combined with a perfluoroacrylate.

2. The method of claim 1 wherein the metal mold surface comprises steel or aluminum.

3. The method of claim 1 or 2 wherein the mold is a mold for molding and curing pneumatic rubber tires or rubber products comprising belts, hoses, vehicular track pads or shoes.

4. The method of at least one of the previous claims wherein the polymerizable precursor is an atomized liquid polymerizable precursor contained in a carrier gas for the precursor and introduced into said ionized gas.

5. The method of claim 1 or 4, wherein the carrier gas for said polymerizable precursor and/or the ionized plasma gas comprises at least one of argon, helium, neon, xenon, oxygen, nitrogen, nitrous oxide and carbon dioxide.

6. The method of at least one of the previous claims wherein the precursor is a polymerizable monomer comprising at least one of alkyldisiloxane comprising hexamethyldisiloxane; disilazane comprising hexamethyldisilazane; fluorinated silane comprising 1 H, 1 H, 2H-perfluorooctyltriethoxysilane, 1 H, 1 H, 2H-perfluoro-1-alkylene wherein the alkylene group comprises decene, octene, hexene or butene groups, or 1 H, 1H, 2H-perfluoro-1-alkanol wherein the alkanol group comprises of decanol, octanol, hexanol or butanol groups; vinylidene fluoride and fluorinated compounds comprising at least one of perfluoromethylcyclohexane, perfluorodimethylcyclohexane, hexafluorobenzene, perfluoromethyl vinyl ether, perfluoroethyl vinyl ether, perfluoropropyl vinyl ether, perfluorodimethylcyclobutane, perfluoromethylcyclopentane, perfluoromethyldecalin, tetrafluoroethylene, hexafluoropropylene and perfluorobutyl ethylene.

7. The method of claim 1 wherein the perfluoroacrylate comprises at least one of perfluorooctylacrylate and perfluorooctylmethacrylate.

8. The method of at least one of the previous claims wherein the precursor is a disiloxane comprising hexamethyldisilazane.

9. The method of at least one of the previous claims wherein the precursor is a fluorinated compound comprising at least one of 1 H, 1 H, 2H-perfluorooctyltriethoxysilane, 1 H, 1 H, 2H-perfluoro-1-alkylene, 1 H, 1 H, 2H-perfluoro-1-alkanol, perfluoromethylcyclohexane, perfluorodimethylcyclohexane, hexafluorobenzene, perfluoromethyl vinyl ether, perfluoroethyl vinyl ether, perfluoropropyl vinyl ether, perfluorodimethylcyclobutane, perfluoromethylcyclopentane, perfluoromethyldecalin, tetrafluoroethylene, hexafluoropropylene and perfluorobutyl ethylene.

10. A mold for molding and curing rubber products prepared by the method of at least one of the previous claims.

11. A method of preparing a rubber product comprising molding and curing a rubber product in the mold of claim 10.

12. A method of preparing a pneumatic rubber tire comprising molding and curing a pneumatic rubber tire in the mold of claim 10.

## Patentansprüche

1. Verfahren zur Behandlung einer Metalloberfläche eines Formwerkzeugs zum Formen und Vulkanisieren von Gummierzeugnissen, wobei das Verfahren das Anbringen eines atmosphärischen Plasmas, umfassend ein ionisiertes Gas, das einen polymerisierbaren Vorläufer enthält, an einer Metall-Formoberfläche des Formwerkzeugs umfasst, um eine Polymerschicht von plasmapolymerisiertem Vorläufer auf der Formwerkzeugmetalloberfläche zu bilden und damit zu verbinden, wobei der Vorläufer ein polymerisierbares Monomer ist, umfassend mindestens eines von Disiloxanen, Disilazanen, Perfluoracrylaten, fluorierten Silanen, Vinylidenfluorid oder eine andere fluorierte Verbindung, und wobei der Vorläufer mit einem Perfluoracrylat kombiniert ist.

2. Verfahren nach Anspruch 1, wobei die Metallformwerkzeugoberfläche Stahl oder Aluminium umfasst.

3. Verfahren nach Anspruch 1 oder 2, wobei das Formwerkzeug ein Formwerkzeug zum Formen und Vulkanisieren von Gummi-Luftreifen oder Gummierzeugnissen ist, umfassend Riemen, Schläuche, Fahrzeug-Kettenpolster oder Schuhe.

4. Verfahren nach mindestens einem der vorhergehenden Ansprüche, wobei der polymerisierbare Vorläufer ein zerstäubter flüssiger polymerisierbarer Vorläufer ist, der in einem Trägergas für den Vorläufer enthalten ist und in das besagte ionisierte Gas eingebracht ist.

5. Verfahren nach Anspruch 1 oder 4, wobei das Trägergas für den polymerisierbaren Vorläufer und/oder das ionisierte Plasmagas mindestens eines von Argon, Helium, Neon, Xenon, Sauerstoff, Stickstoff, Distickstoffoxid und Kohlendioxid umfasst.

6. Verfahren nach mindestens einem der vorhergehenden Ansprüche, wobei der Vorläufer ein polymisierbares Monomer ist, umfassend mindestens eines von Alkyldisiloxan, umfassend Hexamethyldisiloxan; Disilazan, umfassend Hexamethyldisilazan; fluoriertes Silan, umfassend 1 H,1 H,2H-Perfluoroctyltriethoxysilan, 1H,1H,2H-Perfluor-1-alkylen, wobei die Alkylengruppe Decen-, Octen-, Hexen- oder Butengruppen umfasst, oder 1H,1H,2H-Perfluor-1-alkanol, wobei die Alkanolgruppe aus Decanol-, Octanol-, Hexanol- oder Butanolgruppen besteht; Vinylidenfluorid und fluorierte Verbindungen, umfassend mindestens eines von Perfluormethylcyclohexan, Perfluordimethylcyclohexan, Hexafluorbenzen, Perfluormethylvinylether, Perfluorethylvinylether, Perfluorpropylvinylether, Perfluordimethylcyclobutan, Perfluormethylcyclopentan, Perfluormethyldecalin, Tetrafluorethylen, Hexafluorpropylen und Perfluorbutylethylen.

7. Verfahren nach Anspruch 1, wobei das Perfluoracrylat mindestens eines von Perfluoroctylacrylat und Perfluoroctylmethacrylat umfasst.

8. Verfahren nach mindestens einem der vorhergehenden Ansprüche, wobei der Vorläufer ein Disiloxan ist, umfassend Hexamethyldisiloxan.

9. Verfahren nach mindestens einem der vorhergehenden Ansprüche, wobei der Vorläufer eine fluorierte Verbindung ist, umfassend mindestens eines von 1H,1H,2H-Perfluoroctyltriethoxysilan, 1H,1H,2H-Perfluor-1-alkylen, 1H,1H,2H-Perfluor-1-alkanol, Perfluormethylcyclohexan, Perfluordimethylcyclohexan, Hexafluorbenzen, Perfluormethylvinylether, Perfluorethylvinylether, Perfluorpropylvinylether, Perfluordimethylcyclobutan, Perfluormethylcyclopentan, Perfluormethyldecalin, Tetrafluorethylen, Hexafluorpropylen und Perfluorbutylethylen.

10. Formwerkzeug zum Formen und Vulkanisieren von Gummierzeugnissen, vorbereitet mittels des Verfahrens nach mindestens einem der vorhergehenden Ansprüche.

11. Verfahren zur Herstellung eines Gummierzeugnisses, umfassend Formen und Vulkanisieren eines Gummierzeugnisses in dem Formwerkzeug von Anspruch 10.

12. Verfahren zur Herstellung eines Gummi-Luftreifens, umfassend Formen und Vulkanisieren eines Gummi-Luftreifens in dem Formwerkzeug von Anspruch 10.

## Revendications

1. Procédé pour traiter une surface métallique d'un moule destiné au moulage et à la vulcanisation de produits de caoutchouc, le procédé comprenant le fait d'appliquer un plasma à pression atmosphérique comprenant un gaz ionisé contenant un précurseur polymérisable sur une surface métallique de moulage du moule pour former et lier une couche polymère d'un précurseur polymérisé par plasma sur la surface métallique du moule, dans lequel le précurseur est un monomère polymérisable comprenant au moins un monomère choisi parmi des disiloxanes, des disilazanes, des acrylates perfluorés, du fluorure de vinylidène ou un autre composé fluoré, et dans lequel le précurseur est combiné avec un acrylate perfluoré.

2. Procédé selon la revendication 1, dans lequel la surface métallique du moule comprend de l'acier ou de l'aluminium.

3. Procédé selon la revendication 1 ou 2, dans lequel le moule est un moule destiné au moulage et à la vulcanisation de bandages pneumatiques en caoutchouc ou de produits de caoutchouc comprenant des ceintures, des tuyaux flexibles, des plaquettes de chenilles de véhicules ou des chaussures.

4. Procédé selon au moins une des revendications précédentes, dans lequel le précurseur polymérisable est un précurseur polymérisable liquide atomisé contenu dans un gaz porteur pour le précurseur et introduit dans ledit gaz ionisé.

5. Procédé selon la revendication 1 ou 4, dans lequel le gaz porteur pour ledit précurseur polymérisable et/ou le gaz de plasma ionisé comprend au moins un gaz choisi parmi le groupe comprenant l'argon, l'hélium, le néon, le xénon, l'oxygène, l'azote, le monoxyde de diazote et le dioxyde de carbone.

6. Procédé selon au moins une des revendications précédentes, dans lequel le précurseur est un monomère polymérisable comprenant au moins un monomère choisi parmi le groupe comprenant un alkyldisiloxane comprenant l'hexaméthyldisiloxane ; un disilazane comprenant l'hexaméthyldisilazane ; un silane fluoré comprenant le 1H,1H,2H-perfluorooctyltriéthoxysilane ; un 1H,1H,2Hperfluoro-1-alkylène dans lequel le groupe alkylène comprend un groupe décène, un groupe octène, un groupe hexène ou un groupe butène; un 1H,1H,2H-perfluoro-1-alcanol dans lequel le groupe alcanol comprend un groupe décanol, un groupe octanol, un groupe hexanol ou un groupe butanol ; du fluorure de vinylidène et des composés fluorés comprenant au moins un composé fluoré choisi parmi le groupe comprenant le perfluorométhylcyclohexane, le perfluorodiméthylcyclohexane, l' hexafluorobenzène, l'éther perfluorométhylvinylique, l'éther perfluoroéthylvinylique, l'éther perfluoropropylvinylique, le perfluorodiméthylcyclobutane, le perfluorométhylcyclopentane, la perfluorométhyldécaline, le tétrafluoroéthylène, l'hexafluoropropylène et le perfluorobutyléthylène.

7. Procédé selon la revendication 1, dans lequel l'acrylate perfluoré comprend au moins un acrylate choisi parmi le perfluorooctylacrylate et le perfluorooctylméthacrylate.

8. Procédé selon au moins une des revendications précédentes, dans lequel le précurseur est un disiloxane englobant l'hexaméthyldisiloxane.

9. Procédé selon au moins une des revendications précédentes, dans lequel le précurseur est un composé fluoré comprenant au moins un composé choisi parmi le groupe comprenant le 1H,1H,2H-perfluorooctyltriéthoxysilane, un 1H,1H,2H-perfluoro-1-alkylène, un 1H,1H,2H-perfluoro-1-alcanol, le perfluorométhylcyclohexane, le perfluorodiméthylcyclohexane, l' hexafluorobenzène, l'éther perfluorométhylvinylique, l'éther perfluoroéthylvinylique, l'éther perfluoropropylvinylique, le perfluorodiméthylcyclobutane, le perfluorométhylcyclopentane, la perfluorométhyldécaline, le tétrafluoroéthylène, l'hexafluoropropylène et le perfluorobutyléthylène.

10. Procédé pour le moulage et pour la vulcanisation de produits de caoutchouc préparés via le procédé selon au moins une des revendications précédentes.

11. Procédé de préparation d'un produit de caoutchouc comprenant le moulage et la vulcanisation d'un produit de caoutchouc dans le moule selon la revendication 10.

12. Procédé de préparation d'un bandage pneumatique en caoutchouc comprenant le moulage et la vulcanisation d'un bandage pneumatique en caoutchouc dans le moule selon la revendication 10.
